# EUROPÄISCHE PATENTSCHRIFT

(11) **EP 4 308 360 B1**
(45) Veröffentlichungstag und Bekanntmachung des Hinweises auf die Patenterteilung: **23.07.2025**
(21) Anmeldenummer: 22703371.9
(22) Anmeldetag: 02.02.2022
(51) Int. Cl.: B29C 33/10, B29C 44/34, B29C 44/44, B29C 44/58, B29C 67/20

(54) **WERKZEUG ZUR HERSTELLUNG VON SCHAUMSTOFFTEILEN**
TOOL FOR MAKING FOAM PARTS
OUTIL POUR LA FABRICATION DE PIÈCES EN MOUSSE

(30) Priorität: 13.04.2021 DE 102021109197
(43) Veröffentlichungstag der Anmeldung: 24.01.2024
(73) Patentinhaber: Feurer Febra GmbH, 74336 Brackenheim (DE)
(72) Erfinder: FEURER, Markus, 76461 Muggensturm (DE)
(74) Vertreter: Patentanwälte Bregenzer und Reule Partnerschaftsgesellschaft mbB
(86) Internationale Anmeldenummer: PCT/EP2022/052474
(87) Internationale Veröffentlichungsnummer: WO 2022/218580

(56) Entgegenhaltungen:
- EP-A1- 0 607 809
- EP-A2- 3 338 984
- WO-A1-2019/009704
- DE-A1- 10 007 911
- DE-A1- 10 156 590
- DE-A1- 10 231 567
- DE-A1- 102006 056 228
- DE-A1- 19 907 279
- DE-U1- 29 924 215
- JP-A- 2015 013 423
- JP-A- H0 760 761
- US-A- 4 296 053
- US-A- 5 711 905
- US-A1- 2013 344 284

## Beschreibung

Die Erfindung betrifft ein Werkzeug zur Herstellung von Schaumstoffteilen gemäß Oberbegriff des Anspruchs 1.

Werkzeuge (vgl. WO 2019/009704 A1), die der Herstellung von Schaumstoffteilen, beispielsweise Teilen aus expandiertem Polypropylen (EPP), dienen, werden gewöhnlich aus Aluminium hergestellt. Beim Herstellungsprozess werden die Schaumstoffpartikel in den Hohlraum des Werkzeugs eingefüllt und mittels Wärmebeaufschlagung aufgeschäumt. Zu diesem Zweck sind in den Wänden des Werkzeugs oder zwischen einander benachbarten Wänden Öffnungen vorgesehen, um Dampf zum Heizen einzublasen bzw. durch den Dampf verdrängte Luft hinauszuleiten. Diese Öffnungen in die Wände einzubringen ist aufwendig. Alternativ werden Werkzeuge aus metallischem Sintermaterial verwendet, welches luft- bzw. dampfdurchlässig ist, so dass heißer Dampf und verdrängte Luft direkt durch die Wände durchtreten können. In beiden Fällen wird aber zunächst das die Wände bildende Metall aufgeheizt bzw. die Wände kühlen den einströmenden Dampf ab, so dass das Verfahren eine schlechte Energieeffizienz aufweist. Aus der DE 100 07 911 A1 ist ein Werkzeug der eingangs genannten Art bekannt, dessen Filamente aus Fäden bestehen. Ähnliche Werkzeuge sind aus der DE 102 31 567 A1, der DE 10 2006 056 228 A1, der DE 299 24 215 U1 und der DE 199 07 279 A1 bekannt.

Es ist daher Aufgabe der Erfindung, ein Werkzeug der eingangs genannten Art derart weiterzubilden, dass es die oben genannten Nachteile zumindest weitgehend vermeidet.

Diese Aufgabe wird erfindungsgemäß durch ein Werkzeug mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Wände des Werkzeugs zumindest teilweise dampf- bzw. luftdurchlässig zu gestalten, so dass Dampf in den Hohlraum eingeleitet und verdrängte Luft aus dem Hohlraum herausgeleitet werden kann. Dies wird dadurch erzielt, dass mindestens eine der Wände nicht massiv ausgeführt ist, sondern mindestens eine Filament-Wandpartie aufweist, die zumindest einen Teil der Innenfläche der betreffenden Wand umfasst, und die mehrere Lagen von parallel zueinander verlaufenden, fadenförmigen Filamenten aufweist. Insbesondere dann, wenn die Filamente aus einem Kunststoff bestehen, beispielsweise aus einem Polyetherimid, einem Polyamid, einem Polyester oder aus einer Materialmischung, die mindestens zwei dieser Materialien aufweist, ist das Werkzeug nicht nur leicht, sondern die Filament-Wandpartie nimmt beim Einleiten von heißem Dampf weniger Wärme auf als eine metallene Wandpartie und kühlt den Dampf weniger ab, so dass das Werkzeug energieeffizienter ist.

Es wird bevorzugt, dass die Filamente zueinander benachbarter Lagen in unterschiedlichen Raumrichtungen verlaufen. Insbesondere können sie in zueinander senkrecht verlaufenden Raumrichtungen verlaufen, so dass die Filamente kreuz und quer angeordnet sind. Die Lagen der Filamente sind dabei zweckmäßig parallel zueinander angeordnet und spannen zueinander parallele Ebenen auf, die durch die Mittellängsachsen der Filamente einer Lage definiert sind. Desweiteren wird bevorzugt, dass jede Filament-Wandpartie 2 bis 30 Lagen und vorzugsweise 10 bis 20 Lagen von Filamenten aufweist und/oder 1 mm bis 10 mm dick ist.

In der Regel liegen die Filamente nicht so dicht aneinander an, dass sie den Durchtritt von Dampf oder Luft unterbinden. Der Durchtritt von Dampf oder Luft wird aber noch verbessert, wenn die Filamente jeder Lage zumindest teilweise im Abstand zueinander angeordnet sind und/oder Unterbrechungen aufweisen. Ist eine Vielzahl solcher gezielt herbeigeführter Undichtigkeiten vorhanden, so ermöglicht dies einen sehr effizienten Dampfdurchtritt und Wärmeeintrag sowie ein sehr effizientes Ableiten von aus dem Hohlraum verdrängter Luft.

Zweckmäßig ist an der dem Hohlraum abgewandten Seite mindestens einer der Filament-Wandpartien und vorzugsweise jeder Filament-Wandpartie eine Stützstruktur angeordnet, welche vorzugsweise aus demselben Material besteht wie die Filament-Wandpartie. Um den Durchtritt von Dampf oder Luft durch die betreffende Filament-Wandpartie zu erleichtern, kann vorgesehen sein, dass sich Teile der Stützstruktur durch die Lagen der Filamente hindurch und vorzugsweise bis zur Innenfläche der betreffenden Wand erstrecken Die Stützstruktur weist vorzugsweise eine Vielzahl von fadenförmigen Stützfilamenten auf, wobei sich zweckmäßig zumindest einige der Stützfilamente durch die Lagen der Filamente hindurch erstrecken. Auf diese Weise können die oben bereits beschriebenen Durchtrittsöffnungen geschaffen werden, indem zueinander benachbarte Filamente beim Durchtritt eines Stützfilaments voneinander weg verdrängt werden. Zweckmäßig erstrecken sich die Enden von einigen der Stützfilamente bis zur Innenfläche, so dass der Dampfdurchtritt durch alle Filamentlagen erleichtert wird.

Die Stützfilamente weisen vorteilhaft einen größeren Querschnitt auf als die Filamente. Desweiteren weisen sie zweckmäßig zumindest teilweise und vorzugsweise über ihre gesamte Länge einen gekrümmten Verlauf auf. Auf diese Weise werden in der Stützstruktur Dampfdurchtrittsöffnungen und -kanäle geschaffen, die ein gutes Durchleiten von heißem Dampf durch die Stützstruktur zur Filament-Wandpartie bzw. ein gutes Ableiten von verdrängter Luft ermöglichen. Diese Öffnungen bzw. Kanäle sind dann auch größer als sich durch die Filament-Wandpartie erstreckende Öffnungen bzw. Kanäle, deren Filamente einen kleineren Querschnitt aufweisen und durch parallele Anordnung über weite Strecken aneinander anliegen können. Die Stützstruktur kann als eine in alle Richtungen offenporige Struktur bezeichnet werden.

Es kann vorgesehen sein, dass nur eine der Wände eine Filament-Wandpartie aufweist. Es wird jedoch bevorzugt, dass jede der Wände mindestens eine Filament-Wandpartie aufweist. Desweiteren wird bevorzugt, dass die Filament-Wandpartie mindestens einer der Wände deren gesamte Innenfläche umfasst, so dass eine großflächige Einleitung von heißem Dampf und eine großflächige Ausleitung von verdrängter Luft ermöglicht wird.

Zur Herstellung des Werkzeugs wird die Anwendung eines 3D-Druckverfahrens bevorzugt, das erfindungsgemäß für die Herstellung der Filamente verwendet wird. Mit einem solchen 3D-Druckverfahren können auch so filigrane Gebilde wie die Filament-Wandpartien präzise hergestellt werden.

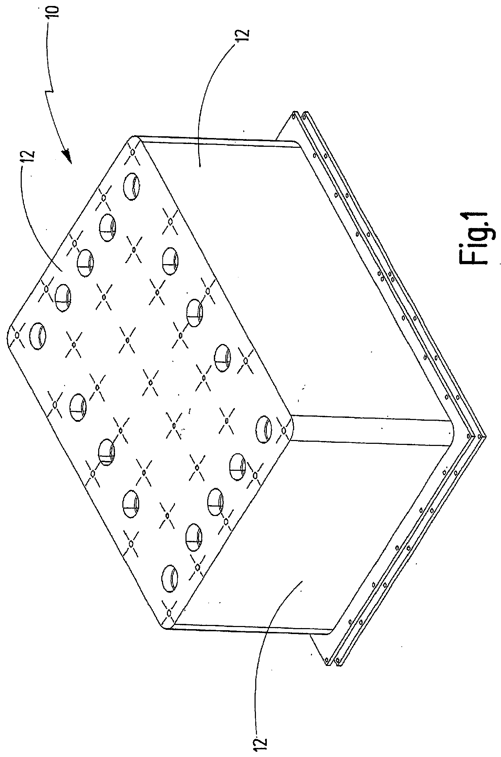

Im Folgenden wird die Erfindung anhand eines in der Zeichnung schematisch dargestellten Ausführungsbeispiels näher erläutert. Es zeigen
- Fig. 1: ein Werkzeug in Gestalt einer Herstellungsform zur Herstellung von Schaumstoffteilen in perspektivischer Ansicht;

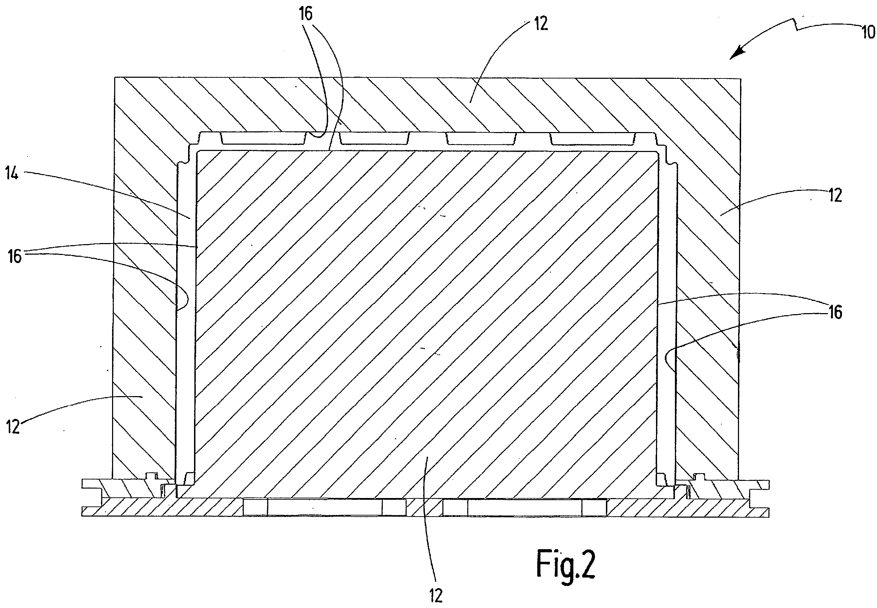

- Fig. 2: einen Schnitt durch das Werkzeug gemäß Fig. 1;
- Fig. 3: eine Draufsicht auf eine Innenfläche des Werkzeugs gemäß Fig. 1 und 2;

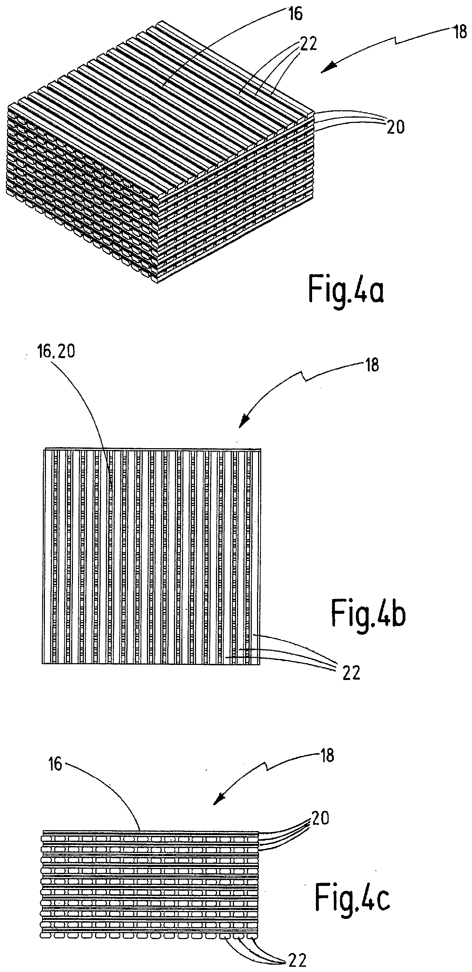

- Fig. 4a-c: eine Filament-Wandpartie in schematischer Darstellung in perspektivischer Ansicht, in Draufsicht und in Seitenansicht und

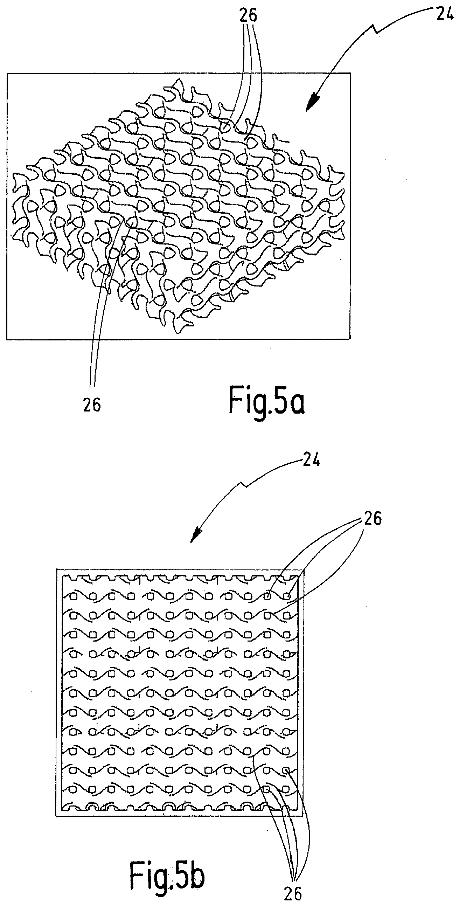

- Fig. 5a, b: eine Stützstruktur in schematischer Darstellung in perspektivischer Ansicht und in Draufsicht.

Das in der Zeichnung dargestellte Werkzeug 10 dient der Herstellung von Formteilen aus Schaumstoff. Es weist Wände 12 auf, die einen Hohlraum 14 einschließen, dessen Form und Größe der Form und Größe des herzustellenden Formteils entspricht und somit dessen Negativ darstellt. Der Hohlraum 14 wird dabei durch die Innenflächen 16 der Wände 12 begrenzt.

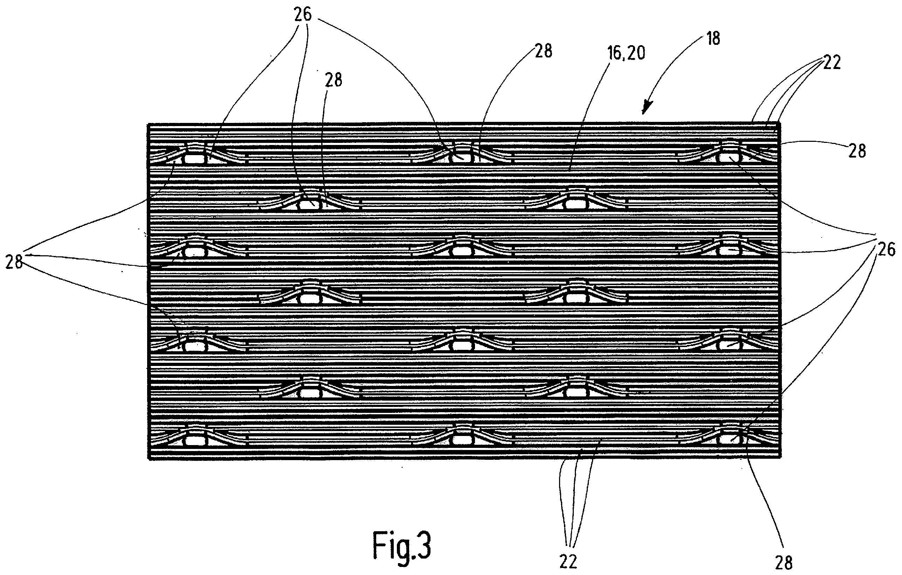

Jede der Wände 12 weist eine Filament-Wandpartie 18 auf, die jeweils die ganze oder einen Großteil der Innenfläche 16 der betreffenden Wand 12 umfasst. Jede Filament-Wandpartie ist aus mehreren, im gezeigten Ausführungsbeispiel zwanzig, Lagen 20 aus fadenförmigen Filamenten 22 aus einem Kunststoff aufgebaut, wobei die Filamente 22 jeder Lage 20 zueinander parallel und aneinander anliegend verlaufen. Die Filamente 22 der benachbarten Lage 20 verlaufen senkrecht zu den Filamenten 22 der erstgenannten Lage 20, so dass die Filamente 22 zueinander benachbarter Lagen stets in verschiedenen, zueinander senkrecht stehenden Raumrichtungen verlaufen. Die Lagen 20 spannen zueinander parallel verlaufende Ebenen auf. In Fig. 3 ist die dem Hohlraum 14 zugewandte oberste Lage 20 zu sehen. Auf der der Innenfläche 16 abgewandten Seite jeder Filament-Wandpartie ist eine Stützstruktur 24 angeordnet, die aus Stützfilamenten 26 aufgebaut ist, welche ebenfalls fadenförmig sind, aber jeweils über ihre gesamte Länge einen gekrümmten Verlauf und einen größeren Querschnitt haben als die Filamente 22. Einige der Stützfilamente 26 erstrecken sich durch die zugehörige Filament-Wandpartie 18 hindurch und enden an der betreffenden Innenfläche 16. Dadurch entstehen zwischen den Filamenten 22 Lücken 28 in der Filament-Wandpartie 18, an denen zueinander benachbarte Filamente 22 stellenweise im Abstand zueinander angeordnet sind.

Zur Herstellung eines Formteils wird der Hohlraum 14 mit Schaumpartikeln gefüllt. Durch die Wände 12 hindurch wird heißer Dampf in den Hohlraum 14 eingeleitet und im Hohlraum 14 befindliche Luft wird durch die Wände 12 hindurch verdrängt. Dabei bilden die Stützstrukturen 24 aufgrund der gekrümmten und ineinander verwobenen Stützfilamente 26 Durchtrittskanäle für Dampf und Luft, während die Lücken 28 an diese anschließende weitere Durchtrittskanäle für den Durchtritt von Dampf und Luft durch die Filament-Wandpartien 18 bilden.

Das Werkzeug 10 ist durch 3D-Druck aus einem Kunststoff oder einer Kunststoffmischung hergestellt. Dabei bestehen die Filament-Wandstrukturen 18 und die Stützstrukturen 24 aus demselben Material.

Zusammenfassend ist folgendes festzuhalten: die Erfindung betrifft ein Werkzeug 10 zur Herstellung von Schaumstoffteilen, das mehrere Wände 12 aufweist, die einen der Form der herzustellenden Schaumstoffteile entsprechenden Hohlraum 14 einschließen, wobei jede Wand 12 eine an den Hohlraum 14 angrenzende Innenfläche 16 aufweist. Erfindungsgemäß ist vorgesehen, dass mindestens eine der Wände 12 mindestens eine Filament-Wandpartie 18 aufweist, die zumindest einen Teil der Innenfläche 16 der betreffenden Wand 12 umfasst, und die mehrere Lagen 20 von parallel zueinander verlaufenden, fadenförmigen Filamenten 22 aufweist.

## Patentansprüche

1. Werkzeug zur Herstellung von Schaumstoffteilen, das mehrere Wände (12) aufweist, die einen der Form der herzustellenden Schaumstoffteile entsprechenden Hohlraum (14) einschließen, wobei jede Wand (12) eine an den Hohlraum (14) angrenzende Innenfläche (16) aufweist, wobei mindestens eine der Wände (12) mindestens eine Filament-Wandpartie (18) aufweist, die zumindest einen Teil der Innenfläche (16) der betreffenden Wand (12) umfasst, und wobei die mindestens eine Filament-Wandpartie (18) mehrere Lagen (20) von parallel zueinander verlaufenden, fadenförmigen Filamenten (22) aufweist, **dadurch gekennzeichnet, dass** die Filamente (22) mittels eines 3D-Druckverfahrens hergestellt sind.

2. Werkzeug nach Anspruch 1, **dadurch gekennzeichnet, dass** die Filamente (22) zueinander benachbarter Lagen (20) in unterschiedlichen Raumrichtungen und insbesondere in zueinander senkrecht verlaufenden Raumrichtungen verlaufen.

3. Werkzeug nach einem der vorangehenden Ansprüche, **dadurch gekennzeichnet, dass** die Lagen (20) parallel zueinander angeordnet sind und zueinander parallele Ebenen aufspannen.

4. Werkzeug nach einem der vorangehenden Ansprüche, **dadurch gekennzeichnet, dass** jede Filament-Wandpartie (18) zwei bis dreißig Lagen (20) und vorzugsweise zehn bis zwanzig Lagen (20) von Filamenten (22) aufweist.

5. Werkzeug nach einem der vorangehenden Ansprüche, **dadurch gekennzeichnet, dass** jede Filament-Wandpartie (18) 1 mm bis 10 mm dick ist.

6. Werkzeug nach einem der vorangehenden Ansprüche, **dadurch gekennzeichnet, dass** die Filamente (22) aus einem Polyetherimid, einem Polyamid, Polyester, aus einem metallhaltigen Material oder aus einer Materialmischung bestehen, die mindestens zwei dieser Materialien aufweist.

7. Werkzeug nach einem der vorangehenden Ansprüche, **dadurch gekennzeichnet, dass** die Filamente (22) jeder Lage (20) zumindest teilweise im Abstand zueinander angeordnet sind und/oder Unterbrechungen aufweisen.

8. Werkzeug nach einem der vorangehenden Ansprüche, **dadurch gekennzeichnet, dass** an der dem Hohlraum (14) abgewandten Seite mindestens einer der Filament-Wandpartien (18) und vorzugsweise jeder Filament-Wandpartie (18) eine Stützstruktur (24) angeordnet ist, welche vorzugsweise aus demselben Material besteht wie die Filament-Wandpartie (18).

9. Werkzeug nach Anspruch 8, **dadurch gekennzeichnet, dass** sich Teile der Stützstruktur (24) durch die Lagen (20) der Filamente (22) hindurch und vorzugsweise bis zur Innenfläche (16) der betreffenden Wand (12) erstrecken.

10. Werkzeug nach Anspruch 8 oder 9, **dadurch gekennzeichnet, dass** die Stützstruktur (24) eine Vielzahl von fadenförmigen Stützfilamenten (26) aufweist.

11. Werkzeug nach Anspruch 10, **dadurch gekennzeichnet, dass** zumindest einige der Stützfilamente (26) sich durch die Lagen (20) der Filamente (22) hindurch erstrecken und dass insbesondere zumindest die Enden von einigen der Stützfilamente (26) sich bis zur Innenfläche (16) der betreffenden Wand (12) erstrecken.

12. Werkzeug nach einem der Ansprüche 10 oder 11, **dadurch gekennzeichnet, dass** die Stützfilamente (26) einen größeren Querschnitt aufweisen als die Filamente (22).

13. Werkzeug nach einem der Ansprüche 10 bis 12, **dadurch gekennzeichnet, dass** die Stützfilamente (26) zumindest teilweise und vorzugsweise über ihre gesamte Länge einen gekrümmten Verlauf aufweisen.

14. Werkzeug nach einem der vorangehenden Ansprüche, **dadurch gekennzeichnet, dass** jede der Wände (12) mindestens eine Filament-Wandpartie (18) aufweist und/oder dass die Filament-Wandpartie (18) mindestens einer der Wände (12) deren gesamte Innenfläche (16) umfasst und/oder dass die Stützfilamente (26) mittels eines 3D-Druckverfahrens hergestellt sind.

15. Verfahren zur Herstellung eines Werkzeugs nach einem der vorangehenden Ansprüche, **dadurch gekennzeichnet, dass** die Filamente (22) und ggf. die Stützfilamente (26) mittels eines 3D-Druckverfahrens hergestellt werden.

## Claims

1. Tool for the manufacture of foam parts, which tool has several walls (12), which enclose a cavity (14) corresponding to the shape of the foam parts to be manufactured, wherein each wall (12) has an inner face (16) adjoining the cavity (14), wherein at least one of the walls (12) has at least one filament wall part (18), which comprises at least one part of the inner face (16) of the associated wall (12), and wherein the at least one filament wall part (18) has several layers (20) of thread-like filaments (22) extending parallel to one another, **characterized in that** the filaments (22) are manufactured by means of a 3D printing process.

2. Tool according to claim 1, **characterized in that** the filaments (22) of mutually adjacent layers (20) extend in different spatial directions and in particular in mutually perpendicular spatial directions.

3. Tool according to one of the preceding claims,
**characterized in that** the layers (20) are disposed parallel to one another and span mutually parallel planes.

4. Tool according to one of the preceding claims,
**characterized in that** each filament wall part (18) has two to thirty layers (20) and preferably ten to twenty layers (20) of filaments (22).

5. Tool according to one of the preceding claims,
**characterized in that** each filament wall part (18) is 1 mm to 10 mm thick.

6. Tool according to one of the preceding claims,
**characterized in that** the filaments (22) consist of a polyether imide, a polyamide, polyester, a metal-containing material or a material mixture containing at least two of those materials.

7. Tool according to one of the preceding claims,
**characterized in that** the filaments (22) of each layer (20) are at least partly disposed with space between one another and/or contain interruptions.

8. Tool according to one of the preceding claims,
**characterized in that** a bracing structure (24) that preferably consists of the same material as the filament wall part (18) is disposed on the side, facing away from the cavity (14), of at least one of the filament wall parts (18) and preferably of every filament wall part (18).

9. Tool according to claim 8, **characterized in that** parts of the bracing structure (24) extend through the layers (20) of the filaments (22) and preferably up to the inner face (16) of the associated wall (12).

10. Tool according to claim 8 or 9, **characterized in that** the bracing structure (24) has a plurality of thread-like bracing filaments (26).

11. Tool according to claim 10, **characterized in that** at least some of the bracing filaments (26) extend through the layers (20) of the filaments (22) and **in that** in particular at least the ends of some of the bracing filaments (26) extend up to the inner face (16) of the associated wall (12).

12. Tool according to one of claims 10 or 11, **characterized in that** the bracing filaments (26) have a larger cross section than the filaments (22).

13. Tool according to one of claims 10 to 12, **characterized in that** the bracing filaments (26) have a curved trajectory that extends at least partly and preferably over their entire length.

14. Tool according to one of the preceding claims,
**characterized in that** each of the walls (12) has at least one filament wall part (18) and/or **in that** the filament wall part (18) of at least one of the walls (12) comprises its entire inner face (16) and/or **in that** the bracing filaments (26) are manufactured by means of a 3D printing process.

15. Method for the manufacture of a tool according to one of the preceding claims, **characterized in that** the filaments (22) and if necessary the bracing filaments (26) are manufactured by means of a 3D printing process.

## Revendications

1. Outil pour la fabrication de pièces en mousse, comportant une pluralité de parois (12) entourant une cavité (14) correspondant à la forme des pièces en mousse à fabriquer, chaque paroi (12) ayant une surface interne (16) adjacente à la cavité (14), au moins une des parois (12) présentant au moins une portion de paroi filamenteuse (18) qui comprend au moins une partie de la surface interne (16) de la paroi respective (12), et l'au moins une portion de paroi filamenteuse (18) comportant une pluralité de couches (20) de filaments filamenteux (22) s'étendant parallèlement les uns aux autres, **caractérisé en ce que** les filaments (22) sont fabriqués au moyen d'un procédé d'impression 3D.

2. Outil selon la revendication 1, **caractérisé en ce que** les filaments (22) de couches adjacentes les unes aux autres (20) s'étendent dans différentes directions spatiales et notamment dans des directions spatiales perpendiculaires les unes aux autres.

3. Outil selon l'une quelconque des revendications précédentes, **caractérisé en ce que** les couches (20) sont disposées parallèlement les unes aux autres et définissent des plans parallèles les uns aux autres.

4. Outil selon l'une quelconque des revendications précédentes, **caractérisé en ce que** chaque portion de paroi filamenteuse (18) comprend deux à trente couches (20) et de préférence dix à vingt couches (20) de filaments (22).

5. Outil selon l'une quelconque des revendications précédentes, **caractérisé en ce que** chaque portion de paroi filamenteuse (18) a une épaisseur de 1 mm à 10 mm.

6. Outil selon l'une quelconque des revendications précédentes, **caractérisé en ce que** les filaments (22) sont constitués d'un polyétherimide, d'un polyamide, de polyester, d'un matériau contenant du métal ou d'un mélange de matériaux comprenant au moins deux de ces matériaux.

7. Outil selon l'une quelconque des revendications précédentes, **caractérisé en ce que** les filaments (22) de chaque couche (20) sont au moins partiellement espacés les uns des autres et/ou présentent des interruptions.

8. Outil selon l'une quelconque des revendications précédentes, **caractérisé en ce que**, sur le côté opposé à la cavité (14) d'au moins une des portions de paroi filamenteuse (18), et de préférence de chaque portion de paroi filamenteuse (18), est disposée une structure de support (24), qui est de préférence constituée du même matériau que la portion de paroi filamenteuse (18).

9. Outil selon la revendication 8, **caractérisé en ce que** des parties de la structure de support (24) s'étendent à travers les couches (20) des filaments (22) et de préférence jusqu'à la surface interne (16) de la paroi (12) concernée.

10. Outil selon la revendication 8 ou 9, **caractérisé en ce que** la structure de support (24) comprend une pluralité de filaments de support filamenteux (26).

11. Outil selon la revendication 10, **caractérisé en ce qu'**au moins certains des filaments de support (26) s'étendent à travers les couches (20) des filaments (22) et **en ce qu'**en particulier au moins les extrémités de certains des filaments de support (26) s'étendent jusqu'à la surface interne (16) de la paroi (12) concernée.

12. Outil selon l'une quelconque des revendications 10 ou 11, **caractérisé en ce que** les filaments de support (26) présentent une section transversale supérieure à celle des filaments (22).

13. Outil selon l'une quelconque des revendications 10 à 12, **caractérisé en ce que** les filaments de support (26) présentent un tracé courbé au moins partiellement et de préférence sur toute leur longueur.

14. Outil selon l'une quelconque des revendications précédentes, **caractérisé en ce que** chacune des parois (12) présente au moins une portion de paroi filamenteuse (18) et/ou **en ce que** la portion de paroi filamenteuse (18) d'au moins une des parois (12) comprend la totalité de sa surface interne (16) et/ou **en ce que** les filaments de support (26) sont fabriqués au moyen d'un procédé d'impression 3D.

15. Procédé de fabrication d'un outil selon l'une quelconque des revendications précédentes, **caractérisé en ce que** les filaments (22) et le cas échéant les filaments de support (26) sont fabriqués au moyen d'un procédé d'impression 3D.
